# EUROPEAN PATENT SPECIFICATION

(11) **EP 2 652 932 B1**
(45) Date of publication and mention of the grant of the patent: **29.07.2015**
(21) Application number: 10805784.5
(22) Date of filing: 17.12.2010
(51) Int. Cl.: H04L 29/06

(54) **MONITORING TARGET HAVING MULTIPLE IDENTITIES IN LAWFUL INTERCEPTION AND DATA RETENTION**
ÜBERWACHUNG EINES ZIELS MIT MEHREREN IDENTITÄTEN BEI LEGALER ABHÖRUNG UND DATENSPEICHERUNG
SURVEILLANCE DE CIBLE AYANT DE MULTIPLES IDENTITÉS EN INTERCEPTION LÉGALE ET RÉTENTION DE DONNÉES

(43) Date of publication of application: 23.10.2013
(73) Proprietor: Telefonaktiebolaget L M Ericsson (publ), 164 83 Stockholm (SE)
(72) Inventor: ATTANASIO, Francesco, 84086 Roccapiemonte (SA) (IT)
(74) Representative: Ericsson
(86) International application number: PCT/EP2010/070162
(87) International publication number: WO 2012/079653

(56) References cited:
- WO-A1-2010/040413
- WO-A2-98/36548
- "Lawful Interception (LI); Retained data handling; eWarrant Interface", ETSI DRAFT; LI(10)0106_EWARRANT_V001, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.0.1, 30 June 2010 (2010-06-30), pages 1-13, XP014062837, [retrieved on 2011-03-08]
- "Lawful Interception (LI); eWarrant Interface", ETSI DRAFT; LI(11)0014_DTR_103_690_V0.1.2_EWARRANT_INT ERFACE_(CLEAN), EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.1.2, 31 December 2010 (2010-12-31), pages 1-23, XP014062851, [retrieved on 2011-03-08]

## Description

### TECHNICAL FIELD

The present invention generally relates to systems, software, methods, nodes and more particularly to mechanisms and techniques, to provide Law Enforcement Agencies with monitoring or retention data related to multiple telecommunication identities owned by single or multiple operators.

### BACKGROUND

Lawful Interception is used for legally monitoring voice and data communications between parties of interest to LEA. Data Retention is used to store data generated from e.g. public telecommunication and the Internet, which might be requested by Law Enforcement Authorities in the course of investigations concerning said suspected criminals. In governments around the world, various law enforcement agencies may have the right to authorize this interception/retention in their respective jurisdictions.

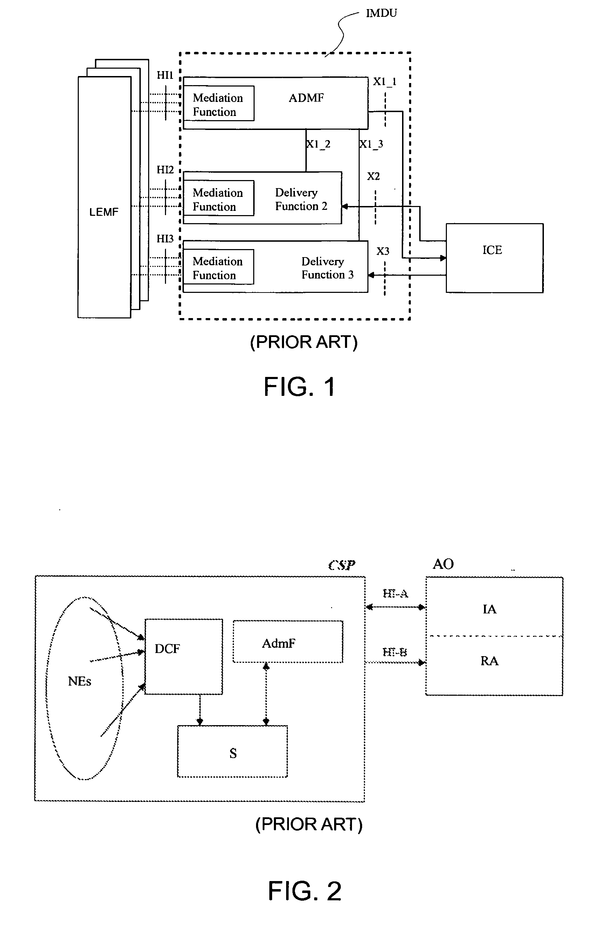

Figure 1 is part of the prior art and discloses an Intercept Mediation and Delivery Unit IMDU, also called Intercept Unit. The IMDU is a solution for monitoring of Interception Related Information IRI and Content of Communication CC for the same target. The different parts used for interception are disclosed in current Lawful Interception standards (see 3GPP TS 33.107 and 3GPP TS 33.108 - Release 8). A Law Enforcement Monitoring Facility LEMF is connected to three Mediation Functions MF, MF2 and MF3 respectively for ADMF, DF2, DF3 i.e. an Administration Function ADMF and two Delivery Functions DF2 and DF3. The Administration Function and the Delivery Functions are each one connected to the LEMF via standardized handover interfaces HI1-HI3, and connected via interfaces X1-X3 to an Intercepting Control Element ICE in a telecommunication system. Together with the delivery functions, the ADMF is used to hide from ICEs that there might be multiple activations by different Law Enforcement Agencies. Messages REQ sent from LEMF to ADMF via HI1 and from the ADMF to the network via the X1_1 interface comprise identities of a target that is to be monitored. The HI1 interface is thus used to set the interception orders in the operator network. The Delivery Function DF2 receives Intercept Related Information IRI from the network via the X2 interface. DF2 is used to distribute the IRI to relevant Law Enforcement Agencies LEAs via the HI2 interface. The Delivery Function DF3 receives Content of Communication CC, i.e. speech and data, on X3 from the ICE. Requests are also sent from the ADMF to the Mediation Function MF2 in the DF2 on an interface X1_2 and to the Mediation Function MF3 in the DF3 on an interface X1_3. The requests sent on X1_3 are used for activation of Content of Communication, and to specify detailed handling options for intercepted CC. In Circuit Switching, DF3 is responsible for call control signalling and bearer transport for an intercepted product. Intercept Related Information IRI, received by DF2 is triggered by Events that in Circuit Switching domain are either call related or non-call related. In Packet Switching domain the events are session related or session unrelated.

For the activation of Intercept Related Information IRI, the message sent from the ADMF to the DF contains the target identity, which can be, for instance, one of the following: the IMSI, MSISDN or IMEI codes commonly associated to a mobile phone subscription. Moreover, the message sent from the ADMF to the DF contains the address for delivery of IRI (i.e. the LEMF address), which subset of information shall be delivered, a DF2 activation identity, which uniquely identifies the activation for DF2 and is used for further interrogation or deactivation, respectively. Furthermore, the message sent from the ADMF to the DF also contains the warrant reference number, if required by national option.

Intercept Related Information IRI events are generated at various moments, particularly when a call is initiated or ended, or for all supplementary services during a call and also for information which is not associated to a call. That is, there are call-related IRI events and non call-related IRI events. In any case, whenever an IRI event occurs which is originated by or directed to a mobile subscriber, the Intercepting Control Element ICE in the network sends the relevant data to the DF2 for them to be delivered to the LEMF.

To assure correlation between the independently transmitted Content of Communication CC and Intercept Related Information IRI of an intercepted call, the following parameters are used: Lawful Interception Identifier LIID, Communication Identifier CID and CC Link Identifier CCLID. Law enforcement can provide an alphanumeric string, the Case Identity to identify a particular surveillance. A case identity may be assigned to a Monitored Object through a command.

While Lawful Interception is a real-time exercise, data from the past is used when Data Retention is practised. Figure 2 belongs to the prior art and shows the Handover Interfaces between a Data Retention System DRS (see ETSI TS 102 656 V.1.2.1 and ETSI TS 102 657 V.1.7.1) at a Communication Service Provider CSP, and an Authorized Organization AO. The figure shows an Administrative Function AdmF used to handle and forward requests from/to the AO. A Data Collection Function DCF collects data from network elements NEs. Storage S is used to collect and retain all possible data collected by the data collection function. The generic Handover Interface adopts a two port structure such that administrative request/response information and Retained Data Information are logically separated. The Handover Interface port 1 HI-A transports various kinds of administrative, request and response information from/to the Authorized Organization AO, and more particularly from/to an Issuing Authority IA thereof, and the organization at the CSP which is responsible for Retained Data matters. The HI-A interface may be crossing borders between countries. This possibility is subject to corresponding national law and/or international agreements. The Handover Interface port 2 HI-B transports the retained data information from the CSP, to the Authorized Organization AO, and more specifically to a Receiving Authority RA thereof. The individual retained data parameters have to be sent to the Requesting Authority at least once (if available). The HI-B interface may be crossing borders between countries. This possibility is subject to corresponding national law and/or international agreements.

An investigation about subjects suspected of criminal activities does not only involve the monitoring of calls and retrieval of data items related to communications of a single target identity, for example a single MSISDN, IMSI, IMEI, IP address, etc. used by the suspected subjects. It is in fact often needed to extend the investigation to multiple identities, for example because the subjects suspected of criminal activities use more than one handset or because the investigation has to consider also other people in relationship with the suspected and whose conversations with each other and with the suspected are also under investigation. This scenario is even more complicated in case the target identities are owned by different operators or providers.

In order for a LEA to monitor all those target identities, several warrants or requests have to be used in the existing Lawful Intercept and Data Retention systems, one for each identity. Even in rather simple investigations, the Authorities need to manage a number of warrants or requests and a number of target identities, which are likely to be spread among different operators. This management is costly and time consuming for the LEA investigators. Moreover, often the data retrieved and the intercepted calls obtained by a LEA are duplicated, because they relate to cross-communications between e.g. two subjects whose identities are both a target of the same investigation. Much time is wasted to discard the duplicate information retrieved, or to correlate the various information with each other within the same investigation.

### SUMMARY

The above-mentioned problem and others are solved by the invention which provides a new functionality for Lawful Intercept and Data Retention that allows combining multiple warrants/queries into one request. In particular, it is described an enhancement of the handover interfaces HI1/HI-A of Lawful Interception LI and Data Retention DR, respectively, which allow to trigger a single warrant with multiple targets included in lists for Lawful Intercept, and performing multiple queries towards those lists in Data Retention, allowing LEA investigators to save time and effort.

According to one aspect of the invention, a number of telecommunication identities of one or more target users are grouped in at least one list of telecommunication identities which is identified by a corresponding identification element, or list identifier. This list identifier can be used as a correlation item in a further enhancement of handover interfaces HI2/HI-B of LI and DR, respectively. This can be useful for example to correlate data related to the same investigation.

According to another aspect of the invention, the information data retrieved from a telecommunications network which relate to the number of identities included in the list of target identities are tagged with a corresponding list identifier before they are delivered to the Authorities requesting the information data.

According to a further aspect of the invention, if the multiple identities which are under investigation are managed by a plurality of network operators, then the single warrant/query is repartitioned into a plurality of requests each directed to each of the network operators managing one or more of said identities.

In one aspect of the invention a Lawful Interception embodiment is disclosed. In another one, the invention works within the framework of a Data Retention application.

The objects of the invention are achieved by methods, arrangements, nodes, systems and articles of manufacture.

The invention will now be described more in detail with the aid of preferred embodiments in connection with the enclosed drawings.

### BRIEF DESCRIPTION OF THE DRAWINGS

Figure 1 is part of the prior art and discloses a block schematic illustration of an Intercept Mediation and Delivery Unit attached to an Intercepting Control Element.
Figure 2 is part of the prior art and discloses a block schematic illustration of the Handover Interfaces between a Data Retention System at a Communication Service Provider, and an Authorized Organization.
Figure 3 discloses a signal sequence diagram representing an example of use of the invention in a Lawful Intercept environment where a list of identities is owned by a single operator.
Figure 4 discloses a signal sequence diagram representing an example of use of the invention in a Lawful Intercept environment where a list of identities is owned by multiple operators.
Figure 5 shows a signal sequence diagram representing an example of Data Retention in a simplified environment involving only one operator.
Figure 6 discloses a signal sequence diagram representing an example of use of the invention to query the Data Retention system in the environment of Figure 5, where a list of identities is owned by a single operator.
Figure 7 shows a signal sequence diagram representing an example of Data Retention in a more complex environment, involving multiple operators.
Figure 8 discloses a signal sequence diagram representing an example of use of the invention to query the Data Retention system in the environment of Figure 7, where a list of identities is owned by multiple operators.

### DETAILED DESCRIPTION

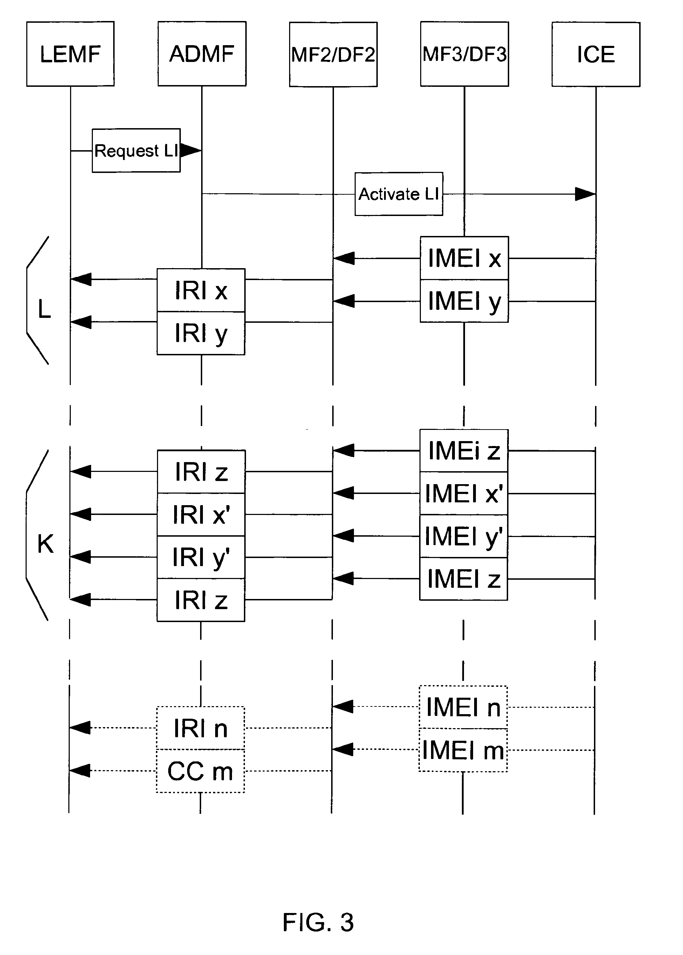

Figure 3 discloses a signal sequence diagram representing an example of use of the invention in a Lawful Intercept environment where a list of identities is owned by a single operator. An enhancement of the handover interface HI1 of the Intercept Unit (see Figure 1) previously discussed is proposed, which allows to trigger a single warrant with multiple identities, belonging to one or more target users included in one or more lists. These lists can be any one of e.g. blacklists (i.e. lists containing identities belonging to known criminals), whitelists (i.e. lists of identities which are clearly not belonging to suspected subjects), and greylists (i.e. lists of identities belonging to suspected subjects). These lists are identified by a list identifier List_id which is also used as a correlation item, thus enhancing the interface HI2 of the Intercept Unit.

In the first example of Figure 3, the multiple identities of one or more subjects suspected of e.g. illegal, criminal or terrorist activities, whose traffic needs to be intercepted, are all owned by a single operator. For the purpose of this example it is assumed that a LEA is interested in two investigations, the first one involving target identities x and y, and the other involving the target identities x' and y', plus the additional identity z.

In a first step, the Law Enforcement Management Function LEMF identifies for example two e.g. IMEI lists of handsets, list L containing identities x and y, and list K containing identities x', y' and z, and passes a request for Lawful Intercept "Request LI" to the Administration Function ADMF of the LI. Then, the Lawful Interception is activated in phase "Activate LI" by providing a single warrant for each list L, K in an Intercepting Control Element ICE (e.g., Gateway GPRS Support Node GGSN, Mobile Switching Centre MSC, etc.) by fetching an e.g. IMEI list of targets, linked to a respective list identifier List_id L and List_id K. Subsequently, the ICE intercepts and filters ("IMEI x", "IMEI y") and ("IMEI x'", "IMEI y'", "IMEI z"), and generally speaking "IMEI m" and "IMEI n" belonging to a generic list List_id, only relevant traffic coming from or going to the identities, listed in the lists identified by List_id L and List_id K (and generally speaking, any list identified by a List_id). The ICE forwards raw IRIs ("IRI x", "IRI y"), ("IRI x'", "IRI y'", "IRI z"), and generally speaking "IRI n", and optionally CC (in general, "CC m") to the Lawful Interception mediation system LEMF, when traffic data related to any of the IMEI in the target lists reaches the ICE. Data relate to the originator or recipient identities under monitoring.

Preferably, possible duplicates are filtered out, before providing the intercepted data on the Handover Interface. For example if IMEIx is in communication with IMEIy, in a specified time window and they are in the same list, the intercepted communication will be reported only once on the Handover Interface. Finally, Lawful Interception Mediation System converts the intercepted traffic into the required standard format and sends it to a collection function running at the LEMFs.

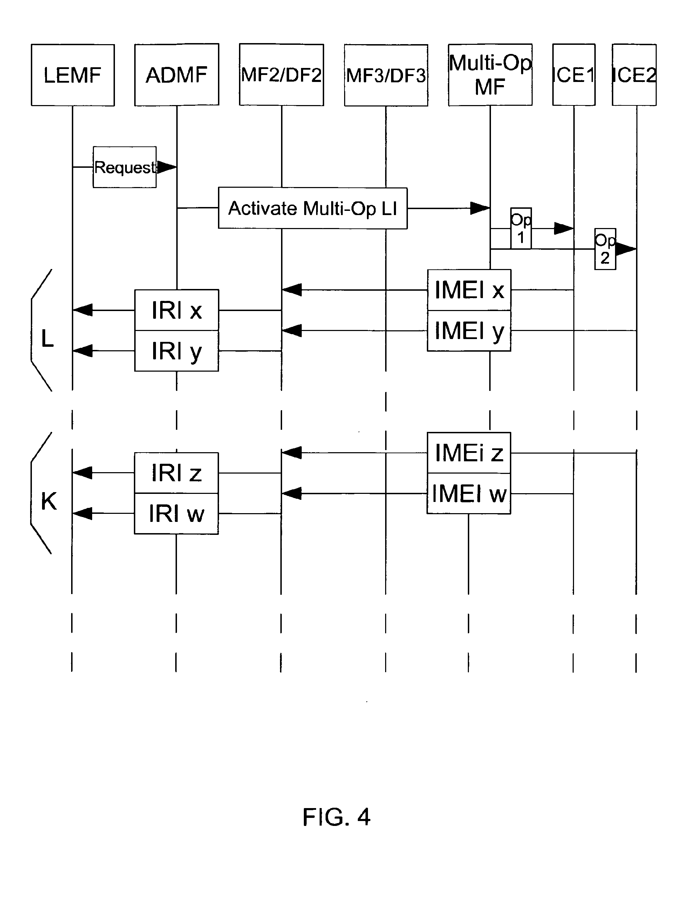

Figure 4 discloses a signal sequence diagram representing another example of use of the invention in a Lawful Intercept environment, where a list of identities is owned by multiple operators. The exemplary scenario is similar to the one discussed above, and relates to an enhancement of the handover interface HI1 of the Intercept Unit (see Figure 1) previously discussed which allows to trigger a single warrant with multiple targets included in one or more lists. These lists can be any one of e.g. blacklists, whitelists and greylists. These lists are identified by a list identifier List_id which is also used as a correlation item, thus enhancing the interface HI2 of the Intercept Unit.

In the second example of Figure 4, the multiple identities of one or more subjects suspected of e.g. illegal, criminal or terrorist activities, whose traffic needs to be intercepted, are owned by different operators, for example a first operator Op1 and a second operator Op2. For the purpose of this example it is assumed that a LEA is interested in two investigations, the first one involving target identities x and y, and the other involving target identities z and w. Target identities x and w are for example owned by the first operator Op1, while target identities y and z are for example owned by the second operator Op2.

In a first step, the Law Enforcement Management Function LEMF identifies for example two e.g. IMEI lists of handsets, list L containing identities x and y, and list K containing identities z and w, which are not owned by a single operator. The LEMF passes a request for Lawful Intercept "Request" to the Administration Function ADMF of the LI. Then, in a second phase the lists are transferred from ADMF to a Multi-Operator Mediation Function "Multi-Op MF" (see "Activate Multi-Op LI"). The triggered warrant shall use a special operator identifier associated to the Multi-Op MF. Then, the Lawful Interception mediation system, using the embedded Multi-Operator Mediation Function, provisions multiple warrants repartitioned among several ICEs, (ICE1, ICE2 in the example) each one owned by a specific operator, by fetching an e.g. IMEI list of targets, linked to a respective list identifier List_id L and List_id K. Subsequently, each ICE intercepts and filters only relevant traffic coming from or going to the identities, listed in the lists identified by List_id L and List_id K (in the example ICE 1: "IMEI x" for List_id L and "IMEI w" for List_id K; ICE 2: "IMEI y" for List_id L and "IMEI z" for List_id K). The ICE forwards raw IRIs ("IRI x", "IRI y", "IRI z", "IRI w"), and optionally CCs (not shown in figure 4) to the Lawful Interception mediation system LEMF, when traffic data related to any of the IMEI in the target lists reaches the ICE. Data relate to the originator or recipient identities under monitoring.

Preferably, possible duplicates are filtered out, before providing the intercepted data on the Handover Interface. For example if IMEIx is in communication with IMEIy, in a specified time window and they are in the same list eg. identified by List_id L, the intercepted communication will be reported only once on the Handover Interface. Finally, Lawful Interception Mediation System converts the intercepted traffic into the required standard format and sends it to a collection function running at the LEMFs, further correlating the provided data by Operator Identifier.

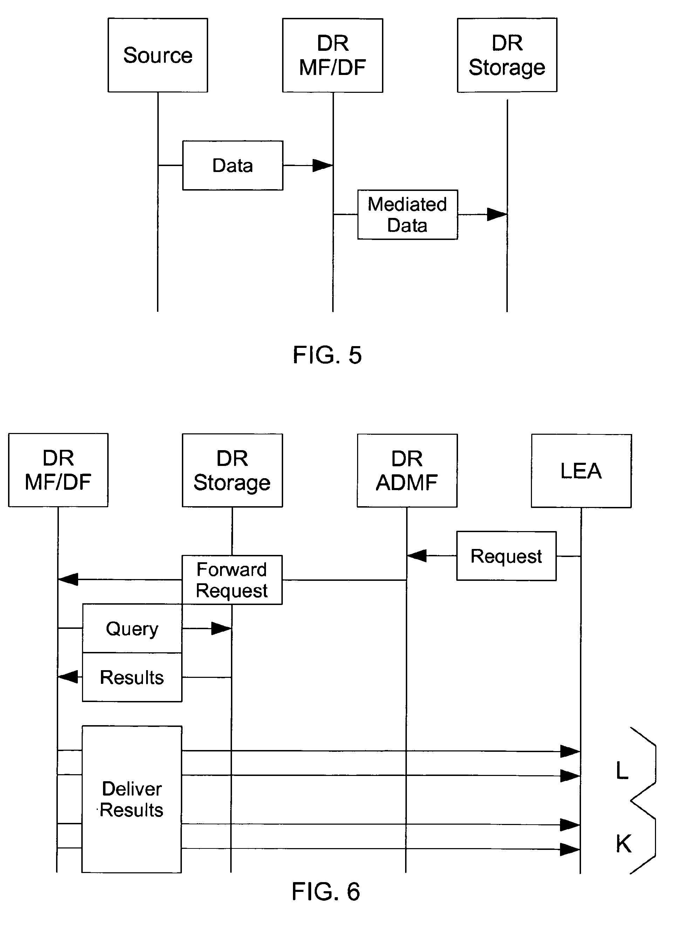

Figure 5 shows a signal sequence diagram representing an example of Data Retention in a simplified environment involving only one operator. Data, e.g traffic data records which includes end users identities such as IP addresses, coming from a Source (e.g. a MultiService Proxy, a Mobile Switching Centre MSC, a Multimedia Messaging Centre MMC, a Radius server, an Email server, a NAT server, etc.), are transferred to the Data Retention system DR Mediation Function/Delivery Function (MF/DF) at a predetermined time interval. Depending on the data source, the data records can contain IP addresses of the users, or IMSI, MSISDN, or any other specific identity indicator. Then, the data are mediated and further transferred ("Mediated Data") from the Data Retention MF/DF and stored in a Data Retention system storage which can be e.g. a database.

With reference to Figure 6, according to the present invention, at any moment a LEA may submit a request to query the Data Retention system storage in order to retrieve traffic data information in a certain time window, about various identities, for example IP addresses, which can be grouped in lists. Each list is identified by a List_id, for example List_id L and List_id K. The request from LEA is received by the Data Retention Administrative Function ADMF through HI-A and it is passed on to the Data Retention MF/DF. In a subsequent phase, the Data Retention storage is queried, and then the results are returned to the MF/DF. The MF/DF then delivers the results of the query to LEA, through HI-B. The delivered data includes traffic data information related to the identities, e.g. IP addresses, each one of them belonging to the respective list identified by e.g. List_id L and List_id K.

In this process, possible duplicates, for example when the originator identity and recipient identity are both in the same list which is monitored, are filtered out. For example, if a first IP address k is in communication, in the specified time window, with a second IP address j which is in the same list of IP addresses under investigation, the monitored communication is reported only once on the Handover interface.

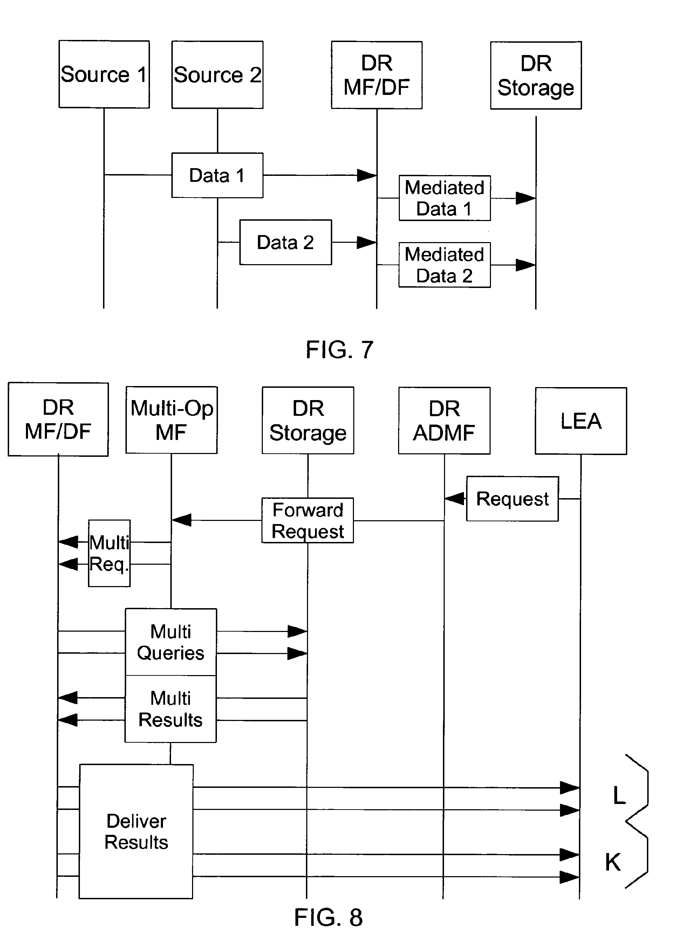

Moreover, the list identifier List-id can be used as a correlation item for the provided traffic query results. Figure 7 shows a signal sequence diagram representing an example of Data Retention in a more complex environment involving several operators. For reasons of clarity, only two operators are shown in Figure 7, but naturally the same concepts apply and can be extended to cover the case of more than two operators. Data, e.g traffic data records which includes end users identities coming from multiple sources ("Source 1", "Source 2"), are transferred to the Data Retention system DR Mediation Function/Delivery Function (MF/DF) at a predetermined time interval. As indicated previously, depending on the data source, the data records can contain IP addresses of the users, or IMSI, MSISDN, or any other specific identity indicator. Event Data Records provided from a specific operator are identified by an operator ID, for example a Communication Service Provider CSP ID, which can be agreed upon on a national basis and is unique for each operator within the same country. Then, the data from each operator ("Data 1", "Data 2") are mediated and further transferred ("Mediated Data 1", "Mediated Data 2") from the Data Retention MF/DF and stored in a Data Retention system storage which can be e.g. a database.

With reference to Figure 8, according to the present invention, at any moment a LEA may submit a request to query the Data Retention system storage in order to retrieve traffic data information or multimedia messaging data information or any other specific information stored in the DR storage system in a certain time window, about various identities, for example IP addresses or IMSIs, which can be grouped in lists. Each list is identified by a List_id, for example List_id L and List_id K. The identities in the lists are associated to a respective CSP ID which identifies the corresponding operator. The request from LEA is received by the Data Retention Administrative Function ADMF through HI-A and it is passed on to a Multi-Operator Mediation Function, which is in charge to associate each identity, for example IP address or IMSI, to the specific CSP ID used for each operator, expanding the single request from LEA into several requests ("Multi Req."), which are then sent to the Data Retention MF/DF. In a subsequent phase, the Data Retention storage is queried, and then the results are returned to the MF/DF. The MF/DF then delivers the results of the query to LEA, through HI-B. The delivered data includes traffic data information related to the identities, e.g. IMSIs or IP addresses, each one of them belonging to the respective list identified by e.g. List_id L and List_id K, and preferably grouped by CSP IDs.

Also in this process, possible duplicates, for example when the originator identity and recipient identity are both in the same list which is monitored, are filtered out. For example, if a first IMSI k is in communication, in the specified time window, with a second IMSI j which is in the same list of IMSIs under investigation, the monitored communication is reported only once on the Handover interface.

Moreover, the list identifier List-id can be used as a correlation item for the provided traffic query results.

The method and systems which have been described above have several advantages, especially for the LEAs. In fact, by using multi-target warrants/multiple list queries, the investigators can save a significant amount of time and efforts. Moreover, the list identifiers - and more generally the process which has been described - gives the Lawful Enforcement Agencies the possibility to get correlated data, providing a more complete and manageable overview of data related to monitored targets for investigation purposes. The LEA can perform multi-target warrants/multiple list queries using subscribers' identities event when they are not owned by a single operator, therefore helping investigators to save time and effort.

The description, for purposes of explanation and not limitation, sets forth specific details, such as particular components, electronic circuitry, techniques, etc., in order to provide an understanding of the present invention. But it will be apparent to one skilled in the art that the present invention may be practised in other embodiments that depart from these specific details. In other instances, detailed descriptions of well-known methods, devices, and techniques, etc., are omitted so as not to obscure the description with unnecessary detail. Individual function blocks are shown in one or more figures. Those skilled in the art will appreciate that functions may be implemented using discrete components or multi-function hardware. Processing functions may be implemented using a programmed microprocessor or general-purpose computer. The invention is not limited to the above described and in the drawings shown embodiments but can be modified within the scope of the enclosed claims.

## Claims

1. Method for providing law enforcement agencies in a telecommunications network with monitoring or retention data related to multiple telecommunication identities in the telecommunications network, comprising the step of grouping a number of said telecommunication identities in at least one list of telecommunication identities identified by a corresponding at least one list identification element, comprising the step of retrieving monitored information data from the telecommunications network relating to the number of telecommunication identities in the at least one list of telecommunication identities, the step of tagging the retrieved monitored information data with a corresponding list identification element, and delivering the retrieved monitored information data tagged with the corresponding list identification element.

2. The method according to claim 1, comprising the step of provisioning a single warrant or request from a law enforcement agency to initiate monitoring on the multiple telecommunication identities.

3. The method according to claim 1, wherein the step of retrieving monitored information data comprises retrieving Intercept Related information and Content of Communication, in a lawful interception system.

4. The method according to claim 1, wherein the step of retrieving monitored information data comprises retrieving retained data in a Data Retention system.

5. The method according to any one of claims 1. to 4, comprising the steps of:
- defining one or more lists of telecommunication identities,
- assigning a unique list identifier to each of the one or more lists of telecommunication identities,
- passing a request for Lawful Intercept to an Administration Function (ADMF) of a Lawful Interception system,
- provisioning a warrant to an Intercepting Control Elements owned by a single operator, by fetching one or more list of target identities,
- intercepting and filtering relevant traffic coming from or going to the identities listed in the lists,
- forwarding raw Intercept Related Information to the Lawful Interception mediation system, when traffic data related to any of the identity in the target lists reaches the Intercepting Control Element,
- delivering the results of the request to Law Enforcement Management Function (LEMF), by the Lawful Interception mediation system through Handover Interface.

6. The method according to any one of claims 1 to 4, comprising the steps of:
- defining one or more lists of telecommunication identities,
- assigning a unique list identifier to each of the one or more lists of telecommunication identities,
- passing a request for querying a storage of a Data Retention system to an Administrative Function (ADMF) of a Data Retention system,
- sending the request to the Data Retention Mediation/Delivery Function (MF/DF)
- querying the Data Retention storage, obtaining at least a set of results
- returning the results to the Mediation/Delivery Function
- delivering the results of the query to LEA, through Handover Interface HI-B.

7. The method according to any one of claims 1 to 6, wherein the telecommunication identities are managed by a plurality of network operators, comprising the step of repartitioning the single request into a plurality of requests each directed to each of the network operators managing one or more of said telecommunication identities.

8. The method according to claim 7, comprising the steps of:
- defining one or more lists of telecommunication identities,
- assigning a unique list identifier to each of the one or more lists of telecommunication identities,
- passing a request for Lawful Intercept to an Administration Function (ADMF) of a Lawful Intercept system,
- transferring the one or more lists from the Administration Function (ADMF) to a Multi-Operator Mediation Function,
- provisioning multiple warrants repartitioned among several Intercepting Control Elements, each one owned by a specific operator, by fetching one or more list of target identities,
- intercepting and filtering relevant traffic coming from or going to the identities listed in the lists,
- forwarding raw Intercept Related Information to the Lawful Interception mediation system, when traffic data related to any of the identity in the target lists reaches the Intercepting Control Elements,
- delivering the results of the request t o Law Enforcement Management Function (LEMF), by the Lawful Interception mediation system through Handover Interface.

9. The method according to any one of claims 1 to 6, wherein the telecommunication identities are managed by a plurality of communication service providers, comprising the step of repartitioning the single request into a plurality of requests directed to each of the retained data specific for each communication service provider, managing one or more of said telecommunication identities.

10. The method according to claim 9, comprising the steps of:
- defining one or more lists of telecommunication identities,
- assigning a unique list identifier to each of the one or more lists of telecommunication identities,
- passing a request for querying a storage of a Data Retention system to an Administrative Function (ADMF) of a Data Retention system,
- passing on the request to a Multi-Operator Mediation Function, which associates each identity to an operator identifier,
- expanding the request from LEA into several requests,
- sending the several requests to the Data Retention Mediation/Delivery Function (MF/DF)
- querying the Data Retention storage, obtaining at least a set of results
- returning the results to the Mediation/Delivery Function
- delivering the results of the query to LEA, through Handover Interface HI-B.

11. The method according to claim 8 or 10, wherein the possible duplicates are filtered out, before providing the data on the Handover Interface.

12. A system for monitoring or retention of data related to multiple telecommunication identities in a telecommunications network, the system comprising tagging means to tag monitored information or retained data with a list identification element identifying one list of said telecommunication identities, further comprising means for retrieving monitored information data from a telecommunications network relating to the number of telecommunication identities in said list of telecommunication identities, and means for delivering the retrieved monitored information data tagged with the corresponding list identification element.

13. A system according to claim 12, being a Lawful Interception system and further comprising a multi-operator Mediation Function to repartition a single warrant into a plurality of warrants each directed to a corresponding network operator managing one or more of said telecommunication identities.

14. A system according to claim 12, being a Data Retention system and further comprising a multi-operator Mediation Function to repartition a single request into a plurality of requests each directed to retained data specific for each communication service provider managing one or more of said telecommunication identities.

15. A telecommunications network comprising a system according toany one of claims 12 to 14.

16. A node for use in a Lawful Interception system for providing law enforcement agencies with monitoring multiple telecommunication identities in a telecommunications network, comprising one or more circuits for grouping a number of said telecommunication identities in at least one list of telecommunication identities identified by a corresponding at least one list identification element, further comprising means for retrieving monitored information data from a telecommunications network relating to the number of telecommunication identities in said list of telecommunication identities, and means for delivering the retrieved monitored information data tagged with the corresponding list identification element.

17. A node for use in a Data Retention system for providing law enforcement agencies with retention data related to multiple telecommunication identities in a telecommunications network, comprising one or more circuits for grouping a number of said telecommunication identities in at least one list of telecommunication identities identified by a corresponding at least one list identification element, further comprising means for retrieving monitored information data from a telecommunications network relating to the number of telecommunication identities in said list of telecommunication identities, and means for delivering the retrieved monitored information data tagged with the corresponding list identification element.

18. An article of manufacture comprising a program storage memory having computer readable code for providing law enforcement agencies in a telecommunications network with monitoring or retention data related to multiple telecommunication identities having one or more telecommunication identities in the telecommunications network, the program code comprising computer readable program code able to group a number of said telecommunication identities in at least one list of telecommunication identities identified by a corresponding at least one list identification element, able also to retrieve monitored information data from a telecommunications network relating to the number of telecommunication identities in the at least one list of telecommunication identities, to tag the retrieved monitored information data with a corresponding list identification element, and to deliver the retrieved monitored information data tagged with the corresponding list identification element.

## Patentansprüche

1. Verfahren zum Bereitstellen von Überwachungsdaten oder Daten aus Vorratsdatenspeicherung, die sich auf mehrere Telekommunikationsidentitäten im Telekommunikationsnetz beziehen, an Vollzugsbehörden in einem Telekommunikationsnetz, umfassend den Schritt des Gruppierens einer Anzahl der Telekommunikationsidentitäten in wenigstens einer Liste aus Telekommunikationsidentitäten, die durch wenigstens ein entsprechendes Listenidentifizierungselement identifiziert wird, umfassend den Schritt des Abrufens von überwachten Informationsdaten aus dem Telekommunikationsnetz mit Bezug auf die Anzahl von Telekommunikationsidentitäten in der wenigstens einen Liste aus Telekommunikationsidentitäten, den Schritt des Markierens der abgerufenen überwachten Informationsdaten mit einem entsprechenden Listenidentifizierungselement, und Liefern der mit dem entsprechenden Listenidentifizierungselement markierten abgerufenen überwachten Informationsdaten.

2. Verfahren nach Anspruch 1, umfassend den Schritt des Einholens einer einzelnen Ermächtigung oder Anforderung von einer Vollzugsbehörde, um das Überwachen der mehreren Telekommunikationsidentitäten einzuleiten.

3. Verfahren nach Anspruch 1, wobei der Schritt des Abrufens überwachter Informationsdaten das Abrufen von abfangbezogenen Informationen und von Kommunikationsinhalt in einem gesetzeskonformen Abfangsystem umfasst.

4. Verfahren nach Anspruch 1, wobei der Schritt des Abrufens von überwachten Informationsdaten das Abrufen von bevorrateten Daten in einem Vorratsdatenspeicherungssystem umfasst.

5. Verfahren nach einem der Ansprüche 1 bis 4, die folgenden Schritte umfassend:
- Definieren einer oder mehrerer Listen aus Telekommunikationsidentitäten,
- Zuordnen eines eindeutigen Listenidentifikators für jede der einen oder mehreren Listen von Telekommunikationsidentitäten,
- Weiterleiten einer Anforderung für ein gesetzeskonformes Abfangen an eine Administrationsfunktion (ADMF) eines gesetzeskonformen Abfangsystems,
- Bereitstellen einer Ermächtigung für ein Abfang-Steuerungselement eines einzelnen Betreibers durch Abrufen einer oder mehrerer Listen von Zielidentitäten,
- Abfangen und Filtern von relevantem Datenverkehr von den und an die Identitäten in den Listen,
- Weiterleiten von unverarbeiteten abfangsbezogenen Informationen an das Vermittlungssystem für gesetzeskonformes Abfangen, wenn Datenverkehrsdaten an eine der Identitäten in den Ziellisten das Abfangsteuerelement erreichen,
- Liefern der Ergebnisse der Anforderung an die Vollzugsbehörden-Verwaltungsfunktion (LEMF), durch das Vermittlungssystem für gesetzeskonformes Abfangen über die Übergabeschnittstelle.

6. Verfahren nach einem der Ansprüche 1 bis 4, die folgenden Schritte umfassend:
- Definieren einer oder mehrerer Listen aus Telekommunikationsidentitäten,
- Zuordnen eines eindeutigen Listenidentifikators für jede der einen oder mehreren Listen von Telekommunikationsidentitäten,
- Weiterleiten einer Anforderung zum Abfragen eines Speichers eines Vorratsdatenspeicherungssystems an eine Administrationsfunktion (ADMF) eines Vorratsdatenspeicherungssystems,
- Senden der Anforderung an die Vorratsdatenspeicher-Vermittlungs-/-Lieferfunktion (MF/DF),
- Abfragen des Vorratsdatenspeichers, Erhalten wenigstens eines Satzes von Ergebnissen,
- Zurücksenden der Ergebnisse an die Vermittlungs-/Lieferfunktion,
- Liefern der Ergebnisse der Anfrage an die Vollzugsbehörde über die Übergabeschnittstelle HI-B.

7. Verfahren nach einem der Ansprüche 1 bis 6, wobei die Telekommunikationsidentitäten von mehreren Netzbetreibern verwaltet werden, umfassend den Schritt des Aufteilens der einen Anforderung in mehrere Anforderungen, die jeweils an jeden der Netzbetreiber gerichtet sind, die eine oder mehrere der Telekommunikationsidentitäten verwalten.

8. Verfahren nach Anspruch 7, die folgenden Schritte umfassend:
- Definieren einer oder mehrerer Listen aus Telekommunikationsidentitäten,
- Zuordnen eines eindeutigen Listenidentifikators für jede der einen oder mehreren Listen von Telekommunikationsidentitäten,
- Weiterleiten einer Anforderung für ein gesetzeskonformes Abfangen an eine Administrationsfunktion (ADMF) eines gesetzeskonformen Abfangsystems,
- Transferieren der einen oder mehreren Listen von der Administrationsfunktion (ADMF) an eine Mehrbetreiber-Vermittlungsfunktion,
- Bereitstellen mehrerer Ermächtigungen, die zwischen mehreren Abfang-Steuerungselementen aufgeteilt worden sind, die jeweils zu einem spezifischen Betreiber gehören, durch Abrufen einer oder mehrerer Listen von Zielidentitäten,
- Abfangen und Filtern von relevantem Datenverkehr von den und an die Identitäten in den Listen,
- Weiterleiten von unverarbeiteten abfangsbezogenen Informationen an das Vermittlungssystem für gesetzeskonformes Abfangen, wenn Datenverkehrsdaten bezogen auf eine der Identitäten in den Ziellisten die Abfangsteuerelemente erreichen,
- Liefern der Ergebnisse der Anforderung an die Vollzugsbehörden-Verwaltungsfunktion (LEMF) durch das Vermittlungssystem für gesetzeskonformes Abfangen über die Übergabeschnittstelle.

9. Verfahren nach einem der Ansprüche 1 bis 6, wobei die Telekommunikationsidentitäten von mehreren Kommunikationsdienstleistern verwaltet werden, umfassend den Schritt des Aufteilens der einen Anforderung in mehrere Anforderungen, von denen jede sich auf Vorratsdaten bezieht, die für jeden Kommunikationsdienstleister spezifisch sind, der eine oder mehrere der Telekommunikationsidentitäten verwaltet.

10. Verfahren nach Anspruch 9, die folgenden Schritte umfassend:
- Definieren einer oder mehrerer Listen aus Telekommunikationsidentitäten,
- Zuordnen eines eindeutigen Listenidentifikators für jede der einen oder mehreren Listen von Telekommunikationsidentitäten,
- Weiterleiten einer Anforderung zum Abfragen eines Speichers eines Vorratsdatenspeicherungssystems an eine Administrationsfunktion (ADMF) eines Vorratsdatenspeicherungssystems,
- Weiterleiten der Anforderung an eine Mehrbetreiber-Vermittlungsfunktion, die jede Identität mit einem Betreiberidentifikator verbindet,
- Erweitern der Anforderung von der Vollzugsbehörde in mehrere Anforderungen,
- Senden der mehreren Anforderungen an die Vorratsdatenspeicher-Vermittlungs-/-Lieferfunktion (MF/DF),
- Abfragen des Vorratsdatenspeichers, Erhalten wenigstens eines Satzes von Ergebnissen,
- Zurücksenden der Ergebnisse an die Vermittlungs-/Lieferfunktion,
- Liefern der Ergebnisse der Anfrage an die Vollzugsbehörde über die Übergabeschnittstelle HI-B.

11. Verfahren nach Anspruch 8 oder 10, wobei die möglichen Duplikate ausgefiltert werden, bevor die Daten an die Übergabeschnittstelle bereitgestellt werden.

12. System zum Überwachen oder Vorratsspeichern von Daten, die sich auf mehrere Telekommunikationsidentitäten in einem Telekommunikationsnetz beziehen, wobei das System Markierungsmittel zum Markieren von überwachten Informationen oder vorratsgespeicherten Daten mit einem Listenidentifizierungselement umfasst, welches eine Liste aus diesen Telekommunikationsidentitäten identifiziert, ferner umfassend Mittel zum Abrufen von überwachten Informationsdaten von einem Telekommunikationsnetz, die sich auf die Anzahl von Telekommunikationsidentitäten in der Liste aus Telekommunikationsidentitäten beziehen, und Mittel zum Liefern der mit dem entsprechenden Listenidentifizierungselement markierten, überwachten Informationsdaten.

13. System nach Anspruch 12, wobei es sich um ein gesetzeskonformes Abfangsystem handelt, das ferner eine Mehrbetreiber-Vermittlungsfunktion umfasst, um eine einzelne Ermächtigung in mehrere Ermächtigungen aufzuteilen, von denen jede an einen entsprechenden Netzbetreiber gerichtet ist, der eine oder mehrere der Telekommunikationsidentitäten verwaltet.

14. System nach Anspruch 12, wobei es sich um ein Vorratsdatenspeicherungssystem handelt, das ferner eine Mehrbetreiber-Vermittlungsfunktion umfasst, um eine einzelne Anforderung in mehrere Anforderungen aufzuteilen, von denen jede sich auf Vorratsdaten bezieht, die für jeden Kommunikationsdienstleister spezifisch sind, der eine oder mehrere der Telekommunikationsidentitäten verwaltet.

15. Telekommunikationsnetz mit einem System nach einem der Ansprüche 12 bis 14.

16. Knoten zum Einsatz in einem gesetzeskonformen Abfangsystem zum Bereitstellen von Überwachung mehrerer Telekommunikationsidentitäten in einem Telekommunikationsnetz an Vollzugsbehörden, umfassend einen oder mehrere Kreise zum Gruppieren einer Anzahl der Telekommunikationsidentitäten in wenigstens einer Liste aus Telekommunikationsidentitäten, welche durch wenigstens ein entsprechendes Listenidentifikationselement identifiziert ist, ferner umfassend Mittel zum Abrufen von überwachten Informationsdaten von einem Telekommunikationsnetz, die sich auf die Anzahl von Telekommunikationsidentitäten in der Liste aus Telekommunikationsidentitäten beziehen, und Mittel zum Liefern der mit dem entsprechenden Listenidentifizierungselement markierten, abgerufenen überwachten Informationsdaten.

17. Knoten zum Einsatz in einem Vorratsdatenspeicherungssystem zum Bereitstellen von Daten aus Vorratsdatenspeicherung mit Bezug auf mehrere Telekommunikationsidentitäten in einem Telekommunikationsnetz an Vollzugsbehörden, umfassend einen oder mehrere Kreise zum Gruppieren einer Anzahl der Telekommunikationsidentitäten in wenigstens einer Liste aus Telekommunikationsidentitäten, welche durch wenigstens ein entsprechendes Listenidentifikationselement identifiziert ist, ferner umfassend Mittel zum Abrufen von überwachten Informationsdaten von einem Telekommunikationsnetz, die sich auf die Anzahl von Telekommunikationsidentitäten in der Liste aus Telekommunikationsidentitäten beziehen, und Mittel zum Liefern der mit dem entsprechenden Listenidentifizierungselement markierten, abgerufenen überwachten Informationsdaten

18. Produktionsartikel, umfassend einen Programmspeicher mit computerlesbarem Code zum Bereitstellen von Überwachung oder Daten aus Vorratsdatenspeicherung mit Bezug auf mehrere Telekommunikationsidentitäten mit einer oder mehreren Telekommunikationsidentitäten im Telekommunikationsnetz an Vollzugsbehörden in einem Telekommunikationsnetz, wobei der Programmcode computerlesbaren Programmcode umfasst, der in der Lage ist, eine Anzahl der Telekommunikationsidentitäten in wenigstens einer Liste aus Telekommunikationsidentitäten, welche durch wenigstens ein entsprechendes Listenidentifikationselement identifiziert ist, zu gruppieren, der ebenfalls in der Lage ist, von einem Telekommunikationsnetz überwachte Informationsdaten, die sich auf die Anzahl von Telekommunikationsidentitäten in der wenigstens einen Liste aus Telekommunikationsidentitäten beziehen, abzurufen, die abgerufenen überwachten Informationsdaten mit einem entsprechenden Listenidentifizierungselement zu markieren und die mit dem entsprechenden Listenidentifizierungselement markierten, abgerufenen Informationsdaten zu liefern.

## Revendications

1. Procédé pour fournir à des agences d'application de la loi dans un réseau de télécommunications des données de surveillance ou de rétention relatives à de multiples identités de télécommunication dans le réseau de télécommunications, comprenant l'étape de groupage d'un certain nombre desdites identités de télécommunication dans au moins une liste d'identités de télécommunication identifiées par un au moins un élément d'identification de liste correspondant, comprenant l'étape de récupération de données d'informations surveillées dans le réseau de télécommunications en rapport avec le nombre d'identités de télécommunication dans la au moins une liste d'identités de télécommunication, l'étape d'étiquetage des données d'informations surveillées récupérées avec un élément d'identification de liste correspondant et la délivrance des données d'informations surveillées récupérées étiquetées avec l'élément d'identification de liste correspondant.

2. Procédé selon la revendication 1, comprenant l'étape de mise à disposition d'un seul mandat ou d'une seule demande d'une agence d'application de la loi pour lancer une surveillance sur les multiples identités de télécommunication.

3. Procédé selon la revendication 1, dans lequel l'étape de récupération de données d'informations surveillées comprend la récupération d'informations relatives à l'interception et du contenu de communications dans un système d'interception légale.

4. Procédé selon la revendication 1, dans lequel l'étape de récupération de données d'informations surveillées comprend la récupération de données retenues dans un système de rétention de données.

5. Procédé selon l'une quelconque des revendications 1 à 4, comprenant les étapes consistant à :
- définir une ou plusieurs listes d'identités de télécommunication,
- affecter un identifiant de liste unique à chacune des une ou plusieurs listes d'identités de télécommunication,
- faire passer une demande d'interception légale à une fonction administrative (ADMF) d'un système d'interception légale,
- mettre à disposition un mandat auprès d'un élément de contrôle d'interception possédé par un seul opérateur en allant chercher une ou plusieurs listes d'identités cibles,
- intercepter et filtrer le trafic concerné venant des identités énumérées dans les listes ou allant à celles-ci,
- acheminer des informations brutes relatives à l'interception auprès du système de médiation d'interception légale lorsque des données de trafic se rapportant à l'une quelconque de l'identité des listes cibles atteignent l'élément de contrôle d'interception,
- délivrer les résultats de la demande à la fonction de gestion d'application de la loi (LEMF) par le système de médiation d'interception légale via une interface de transfert.

6. Procédé selon l'une quelconque des revendications 1 à 4, comprenant les étapes consistant à :
- définir une ou plusieurs listes d'identités de télécommunication,
- affecter un identifiant de liste unique à chacune des une ou plusieurs listes d'identités de télécommunication,
- faire passer une demande d'interrogation d'une mémoire d'un système de rétention de données auprès d'une fonction administrative (ADMF) d'un système de rétention de données,
- envoyer la demande à la fonction de médiation/délivrance (MF/DF) de rétention de données,
- interroger la mémoire de rétention de données pour obtenir au moins un ensemble de résultats,
- renvoyer les résultats à la fonction de médiation/délivrance, et
- délivrer les résultats de l'interrogation à la LEA via l'interface de transfert HI-B.

7. Procédé selon l'une quelconque des revendications 1 à 6, dans lequel les identités de télécommunication sont gérées par une pluralité d'opérateurs de réseau, comprenant l'étape de répartition de la demande individuelle en une pluralité de demandes dirigées chacune vers chacun des opérateurs de réseau gérant une ou plusieurs desdites identités de télécommunication.

8. Procédé selon la revendication 7, comprenant les étapes consistant à :
- définir une ou plusieurs listes d'identités de télécommunication,
- affecter un identifiant de liste unique à chacune des une ou plusieurs listes d'identités de télécommunication,
- faire passer une demande pour une interception légale auprès d'une fonction de l'administration (ADMF) d'un système d'interception légale,
- transférer les une ou plusieurs listes de la fonction d'administration (ADMF) à une fonction de médiation à opérateurs multiples,
- mettre à disposition de multiples mandats répartis entre plusieurs éléments de contrôle d'interception, chacun étant possédé par un opérateur spécifique, en allant chercher une ou plusieurs listes d'identités cibles,
- intercepter et filtrer le trafic concerné venant des identités énumérées dans les listes ou allant à celles-ci,
- acheminer des informations brutes relatives à l'interception auprès du système de médiation d'interception légale lorsque des données de trafic relatives à l'une quelconque de l'identité des listes cibles atteint les éléments de contrôle d'interception, et
- délivrer les résultats de la demande à la fonction de gestion pour l'application de la loi (LEMF) par le système de médiation d'interception légale via l'interface de transfert.

9. Procédé selon l'une quelconque des revendications 1 à 6, dans lequel les identités de télécommunication sont gérées par une pluralité de fournisseurs de services de communication, comprenant l'étape de répartition de la demande individuelle en une pluralité de demandes dirigées vers chacune des données retenues spécifiques pour chaque fournisseur de services de communication gérant une ou plusieurs desdites identités de télécommunication.

10. Procédé selon la revendication 9, comprenant les étapes consistant à :
- définir une ou plusieurs listes d'identités de télécommunication,
- affecter un identifiant de liste unique à chacune des une ou plusieurs listes d'identités de télécommunication,
- faire passer une demande d'interrogation d'une mémoire d'un système de rétention de données auprès d'une fonction administrative (ADMF) d'un système de rétention de données,
- faire passer la demande auprès d'une fonction de médiation à opérateurs multiples, qui associe chaque identité à un identifiant d'opérateur,
- élargir la demande provenant de la LEA en plusieurs demandes,
- envoyer les multiples demandes à la fonction de médiation/délivrance (MF/DF) de rétention de données,
- interroger la mémoire de rétention de données pour obtenir au moins un ensemble de résultats,
- renvoyer les résultats à la fonction de médiation/délivrance, et
- délivrer les résultats de l'interrogation à la LEA via l'interface de transfert HI-b.

11. Procédé selon la revendication 8 ou la revendication 10, dans lequel les doublons possibles sont éliminés par filtration avant de fournir les données sur l'interface de transfert.

12. Système de surveillance ou de rétention de données relatives à de multiples identités de télécommunication dans un réseau de télécommunications, le système comprenant des moyens d'étiquetage pour étiqueter des informations ou des données retenues surveillées avec un élément d'identification de liste identifiant une liste desdites identités de télécommunication, comprenant en outre des moyens pour récupérer des données d'information surveillées d'un réseau de télécommunications se rapportant au nombre d'identités de télécommunication dans ladite liste d'identités de télécommunication, et des moyens pour délivrer les données d'information surveillées récupérées étiquetées avec l'élément d'identification de liste correspondant.

13. Système selon la revendication 12, qui est un système d'interception légale et comprend en outre une fonction de médiation à opérateurs multiples pour répartir un simple mandat en une pluralité de mandats dirigés chacun vers un opérateur de réseau correspondant gérant une ou plusieurs desdites identités de télécommunication.

14. Système selon la revendication 12, qui est un système de rétention de données qui comprend en outre une fonction de médiation à opérateurs multiples pour répartir une simple demande en une pluralité de demandes dirigées chacune vers des données retenues spécifiques pour chaque fournisseur de services de communication gérant une ou plusieurs desdites identités de télécommunication.

15. Réseau de télécommunications comprenant un système selon l'une quelconque des revendications 12 à 14.

16. Noeud pour utilisation dans un système d'interception légale pour fournir à des agences d'application de la loi des identités de télécommunication multiples à des fins de surveillance dans un réseau de télécommunications, comprenant un ou plusieurs circuits pour grouper un certain nombre desdites identités de télécommunication dans au moins une liste d'identités de télécommunication identifiée par au moins un élément d'identification de liste correspondant, comprenant en outre des moyens pour récupérer des données d'informations surveillées d'un réseau de télécommunications se rapportant au nombre d'identités de télécommunication dans ladite liste d'identités de télécommunication, et des moyens pour délivrer les données d'informations surveillées récupérées étiquetées avec l'élément d'identification de liste correspondant.

17. Noeud pour utilisation dans une système de rétention de données afin de fournir à des agences d'application de la loi des données de rétention rapportées à de multiples identités de télécommunication dans un réseau de télécommunications, comprenant un ou plusieurs circuits pour grouper un certain nombre desdites identités de télécommunication en au moins une liste d'identités de télécommunication identifiée par l'un correspondant d'au moins un élément d'identification de liste, comprenant en outre des moyens pour récupérer des données d'informations surveillées d'un réseau de télécommunications se rapportant au nombre d'identités de télécommunication dans ladite liste d'identités de télécommunication et des moyens pour délivrer les données d'information surveillées récupérées étiquetées avec l'élément d'identification de liste correspondant.

18. Article de fabrication comprenant une mémoire de stockage de programme ayant un code lisible sur ordinateur pour fournir à des agences d'application de la loi d'un réseau de télécommunications des données de surveillance et de rétention relatives à de multiples identités de télécommunication ayant une ou plusieurs identités de télécommunication dans le réseau de télécommunications, le code de programme comprenant un code de programme lisible sur ordinateur qui est à même de regrouper un certain nombre desdites identités de télécommunication dans au moins une liste d'identités de télécommunication identifiée par le au moins un élément d'identification de liste correspondant qui est également à même de récupérer des données d'informations surveillées d'un réseau de télécommunications se rapportant au nombre d'identités de télécommunication dans la au moins une liste d'identités de télécommunication, étiqueter les données d'informations surveillées récupérées avec un élément d'identification de liste correspondant, et délivrer les données d'informations contrôlées récupérées étiquetées avec l'élément d'identification de liste correspondant.
